# NOUVEAU FASCICULE DE BREVET EUROPEEN

(11) **EP 0 774 210 B2**
(45) Date de publication et mention de la décision concernant l'opposition: **09.09.2009**
(45) Mention de la délivrance du brevet: 17.04.2002
(21) Numéro de dépôt: 96402289.1
(22) Date de dépôt: 28.10.1996
(51) Int. Cl.: A23G 3/00

(54) **Revêtement sans sucre pour dragéification dure et son procédé de dragéification**
Zuckerfreie Beschichtungszusammensetzung zum hart Dragieren und Dragierungsverfahren
Sugarfree coating for preparing hard dragées and process for preparation of them

(30) Priorité: 30.10.1995 FR 9512773
(43) Date de publication de la demande: 21.05.1997
(73) Titulaire: Roquette Frères, 62136 Lestrem (FR)
(72) Inventeur: Ribadeau-Dumas, Guillaume, 59130 Lambersart (FR); Serpelloni, Michel, 62660 Beuvry les Bethune (FR)
(74) Mandataire: Boulinguiez, Didier

(56) Documents cités:
- EP-A- 0 201 412
- EP-A- 0 228 999
- EP-A- 0 229 594
- EP-A- 0 272 220
- EP-A- 0 308 317
- EP-A- 0 415 656
- EP-A- 0 625 311
- WO-A-95/07621
- WO-A-95/07625
- FR-A- 2 342 668
- GB-A- 1 247 979
- JP-A- 06 292 511
- JP-A- 07 250 626
- US-A- 4 238 510
- US-A- 4 317 838
- US-A- 5 270 061
- US-A- 5 376 389

## Description

L'invention a pour objet un nouveau revêtement cristallin à base d'un mélange particulier de polyols.

Elle vise également le procédé d'obtention de ce revêtement par dragéification dure.

La dragéification dure est une opération unitaire employée dans bon nombre de domaines parmi lesquels ceux de la confiserie et de la pharmacie. Elle peut concerner également l'industrie des additifs que sont les arômes, les édulcorants, les vitamines, les enzymes, les acides et les produits à base de plantes. Cette opération consiste à créer un revêtement dur cristallin à la surface de produits solides ou pulvérulents, afin de les protéger pour diverses raisons ou bien afin de les rendre attractifs visuellement ou gustativement. Très généralement, cette opération unitaire est réalisée en plaçant de tels produits en tant que noyaux à rèvêtir, dans une turbine de dragéification.

La dragéification dure vise à obtenir une couche croustillante et sucrée, toujours très appréciée dans le cas de confiseries ou de chewing-gums. Elle nécessite toujours l'utilisation d'un sirop et/ou d'une suspension contenant des matières cristallisables. Le revêtement dur et cristallin s'obtient alors par application de ce sirop ou de cette suspension sur les noyaux et évaporation de l'eau apportée par ceux-ci grâce à un séchage par air chaud et sec, ce qui provoque la cristallisation. Ce cycle doit être répété un très grand nombre de fois de l'ordre de dix à quatre vingt fois afin d'obtenir le taux de grossissage voulu. On appelle couramment taux de grossissage, l'accroissement en poids des produits, considérés en fin d'opération par rapport au début, rapporté au poids final des produits.

La dragéification dure peut être précédée ou suivie par d'autres techniques d'enrobage. On peut retenir en particulier les techniques suivantes qui se réalisent souvent aussi en employant une turbine de dragéification :
- le gommage qui est une technique dans laquelle sont utilisés des sirops de matières non cristallisables et en général non hygroscopiques comme les gommes arabiques, les amidons et les celluloses modifiés, les maltodextrines. Cette technique permet, après une ou deux applications du sirop de gommage sur le produit à revêtir, de créer un film vitreux faisant barrière à la migration de l'oxygène, de l'eau ou des matières grasses. Dans ce procédé peuvent également être employées conjointement à ces sirops non cristallisables, des poudres de diverses natures, de façon à fixer l'eau apportée par les sirops. Dans d'autres cas encore, on emploie des sucres ou des polyols fondus ou liquéfiés par des solvants. Le revêtement vitreux, dur et cassant, est obtenu alors par refroidissement ou par évaporation des solvants.
- la dragéification tendre qui consiste à créer un revêtement très souple et tendre à la surface des produits. Ce revêtement est obtenu par applications répétées d'une part d'un sirop non cristallisable comme en général les hydrolysats d'amidons, et d'autre part d'une poudre, en général du saccharose cristallisé. Le revêtement est habituellement épais. Le taux de grossissage pour cette technique est de l'ordre de 10 à 80 % voire davantage. Il est à noter que la matière constitutive du sirop est habituellement différente de celle de la poudre.
- le brillantage qui consiste par emploi de corps gras ou de cires généralement apportés sous forme cristallisée en paillettes ou de solutions alcooliques, à revêtir les produits d'une très fine pellicule grasse afin de réduire les transferts d'eau depuis ou vers les produits enrobés mais aussi d'embellir leur surface.

Le terme dragéification dure employé dans la présente invention comprend également les techniques très voisines que sont le lissage et le givrage.

Le lissage consiste en une ou deux applications ou charges d'un sirop cristallisable dilué par rapport à celui utilisé en dragéification dure. Le but est souvent de parfaire l'aspect de surface de produits dragéifiés.

Le givrage quant à lui vise également à améliorer l'aspect des produits, mais aussi à isoler ces derniers de l'humidité de l'atmosphère. Cette technique ressemble à une dragéification dure, en ce sens qu'un sirop cristallisable est utilisé. La différence essentielle réside dans le fait que le nombre de cycles réalisés n'est que d'un, deux ou trois seulement.

On s'intéresse donc dans le cadre de la présente invention à la dragéification dure proprement dite, au lissage, au givrage ainsi qu'à ces techniques combinées. Une dragéification dure est souvent suivie d'un lissage.

Plusieurs de ces procédés d'enrobage ont été appliqués en utilisant des polyols.

Par polyols, on entend d'ordinaire comme dans la présente invention, les sucre-alcools obtenus par réduction de sucres. Plus précisément, dans le cadre de l'invention, on s'intéresse au mannitol.

On s'intéresse également aux polyols particuliers suivants : le xylitol, le maltitol et le lactitol.

Enfin, on s'intéresse au glucose 1-6 mannitol (ou alpha-D-glucopyranosyl-1-6-mannitol) et aux mélanges de polyols qui contiennent cette molécule comme l'isomalt.

De saveur sucrée généralement inférieure à celle attribuée au saccharose qu'ils tendent à remplacer en alimentation humaine mais également dans les formulations pharmaceutiques et diététiques, les polyols présentent l'avantage de n'être pas cariogènes et de posséder une valeur calorique fixée en Europe aux deux tiers de celle du sucre.

Parmi les polyols, seul à ce jour le sorbitol est commercialisé sous forme de sirops de haute pureté directement utilisables en dragéification dure, notamment selon le procédé faisant l'objet du brevet EP 037.407.

En ce qui concerne le xylitol, le maltitol et le lactitol auxquels on s'intéresse spécialement dans le cadre de la présente invention, il est habituel, pour procéder à une dragéification dure, de dissoudre au préalable à chaud l'un de ces polyols dans l'eau pour préparer ainsi des solutions cristallisables. Il a toujours été considéré indispensable d'utiliser par analogie avec ce qui est fait pour le saccharose, des poudres de très haute pureté de façon à permettre une cristallisation rapide et aisée du polyol retenu à partir de la solution ou de la suspension employée en dragéification dure. Cette obligation est rappelée par exemple dans l'article de F. BOUTIN "Sugarless panning procedures and techniques" The Manufacturing Confectioner, 1992, 77-82. Il est dit que la vitesse de cristallisation dépend directement de la pureté du sirop de polyol utilisé. L'auteur se réfère au saccharose pour lequel il à été constaté que cette vitesse est réduite de moitié lorsque sa pureté n'est que de 95 %, cela par rapport à des solutions pures.

Concernant la dragéification dure au xylitol, en dehors de cet article, la nécessité de retenir du xylitol de haute pureté est mentionnée directement ou indirectement dans les documents suivants :
- le brevet FR 2.342.668 de la société FERRERO, où il est dit aussi qu'il est impératif d'employer du xylitol renfermant au plus 5 % d'autres polyols tels que le sorbitol et/ou le mannitol,
- le brevet US 4.127.677 au nom de la société LIFE SAVERS où il est préconisé d'employer une solution contenant sur sec de 95 à 99,5 % de xylitol, obtenue par dissolution à froid de xylitol cristallin puis chauffage du mélange,
- le document "FOOD TECHNOLOGICAL EVALUATION OF XYLITOL" de F. VOIROL, ADVANCES in FOOD RESEARCH, 1982, vol 28, 373-403, où il est dit simplement qu'il est avantageux de préparer une solution sursaturée à 85 % de matière sèche en xylitol,
- le brevet EP 273.000 de la société WARNER-LAMBERT Company dans lequel est décrit un produit comestible revêtu d'un enrobage composé de 40 à 70 % de xylitol, le complément à 100 % étant formé d'au moins un agent filmogène, d'au moins un liant et d'au moins un agent de charge de nature minérale et éventuellement d'au moins un plastifiant. Ce brevet revendique aussi un procédé de dragéification consistant en l'emploi successif de trois sirops de dragéification contenant toujours, relativement à leurs matières sèches, moins de 35 % d'un sucre ou d'un polyol tel qu'en particulier le xylitol,
- et les brevets US 4.681.766 et US 4.786.511 dont la société WARNER-LAMBERT Company est également titulaire, dans lesquels sont décrits une solution de dragéification dure et un revêtement de dragéification contenant tous deux 30 à 80 % d'un édulcorant, de préférence le xylitol, 1 à 15 % de gomme arabique et 0,05 à 10 % d'un sel de calcium.

Plusieurs documents font également état de la possibilité de réaliser une dragéification dure par emploi de maltitol, dans la mesure où la pureté de ce polyol est très élevée. C'est le cas en particulier :
- du brevet EP 201.412, dont la demanderesse est titulaire, où sont dévoilés à la fois un procédé de dragéification par emploi d'un sirop de maltitol d'une pureté dépassant 92 % et un produit possédant un revêtement dur cristallin contenant au moins 90 % de maltitol.
- et la demande de brevet JP 61.263915 au nom de la société HAYASHIBARA, relative à l'emploi en dragéification dure d'un sirop contenant du maltitol de pureté supérieure à 90 % et un agent de cohésion.

En ce qui concerne la dragéification avec isomalt, on connaît aussi les brevets US 4,792,453 et 5,248,508 de la Société WRIGLEY où seul en tant que polyol, l'isomalt est dissous dans l'eau pour préparer les solutions de dragéification.

La dragéification dure avec le lactitol est également connue. Dans ce cas, là encore, il semble qu'à ce jour il n'ait encore jamais été envisagé de l'utiliser autrement qu'en tant que seul polyol pur.

Dans le cas du mannitol, bien qu'il soit fait état dans la demande EP 308.317 déposée par la Société SANOFI de la possibilité de réaliser une dragéification dure avec du mannitol, sans que toutefois soient données concrètement les conditions d'une telle opération, il apparaît très difficile d'y parvenir. Ceci est confirmé par le document de F. DEVOS "Coating with sorbitol, a comparaison of properties of sorbitol-mannitol, others polyols and sucrose" in The Manufacturing Confectioner, 1980, vol. 60 p. 26, où l'auteur explique que la solubilité du mannitol est trop faible pour permettre de bonnes conditions de dragéification dure et que trop d'eau serait alors à évaporer. Ceci explique qu'il n'ait a priori jamais existé sur le marché de produit dragéifié avec du mannitol.

En conclusion, il existe un postulat couramment répandu selon lequel il convient, pour réaliser de manière rapide et satisfaisante une dragéification dure aux polyols, de retenir un seul polyol pur.

Cela n'est pas en contradiction, bien au contraire, avec les principes de base des deux plus récentes techniques connues de dragéification dure décrites ci-après.

La première de ces deux nouvelles techniques, décrite notamment dans les brevets et demandes de brevet US 5,270,061; WO 93/18663, WO 95/07621 et WO 95/07622 de la société WRIGLEY, consiste en une dragéification "duale" ou "double". Il s'agit de commencer la dragéification avec un sirop contenant un polyol pur comme le xylitol, le maltitol ou le lactitol puis de la continuer et de la terminer par emploi d'un autre sirop de polyol également pur mais de nature différente du premier polyol, comme l'isomalt. Cette technique de double dragéification vise essentiellement à réduire le coût de la dragéification par substitution partielle d'un polyol par un autre et à réduire l'hygroscopicité de la couche dragéifiée. Elle semble toutefois très coûteuse en temps et difficile à mettre en oeuvre industriellement.

La seconde technique récente est divulguée dans la demande de brevet EP 625.311 dont la demanderesse est titulaire. Il y est revendiqué d'appliquer successivement un sirop de polyol de haute pureté et une poudre contenant le même polyol à l'état pur et de ne pas procéder, comme d'ordinaire, à un séchage forcé par air sec et chaud dans la turbine de dragéification. Ce procédé permet de réduire très fortement les temps de dragéification et d'obtenir des revêtements relativement croustillants après stockage de quelques heures.

En dehors de la recherche de moyens visant à réduire les coûts de la dragéification dure aux polyols et notamment de réduire les temps de dragéification, on a souvent recherché des solutions visant à augmenter la croustillance et le croquant de revêtements dragéifiés aux polyols. Ces facteurs, tout comme le goût, agissent directement au niveau de l'acceptation des produits et du renouvellement des actes d'achat par les consommateurs.

Comme en fait état G. RIBADEAU DUMAS dans sa conférence intitulée "Actual manufacturing possibilities for sugarless hard and soft coating : techniques - problems - solutions" in SüBwaren - Dragee - Tagung, Mai 1994, Solingen, Zentralfachshule der Deutschen SüBwarenwirtschaft e.V., la croustillance est une grandeur organoleptique subjective et complexe, qui peut toutefois être appréhendée par des mesures mécaniques de dureté et de friabilité à l'aide d'un appareil de type INSTRON. C'est ainsi qu'il lui a été possible de démontrer de façon objective que la croustillance varie avec les caractéristiques du noyau à dragéifier comme avec celles de la couche dragéifiée. La nature du polyol retenu pour préparer les couches dragéifiées, la teneur en eau des couches dragéifiées en fin de dragéification ainsi que l'activité de l'eau sont décrites comme des facteurs agissant directement sur le caractère croustillant.

Mais malheureusement remplacer un polyol par un autre pour obtenir une croustillance améliorée n'est pas sans conséquence sur les autres caractéristiques organoleptiques essentielles de la couche dragéifiée que sont la saveur sucrée, la blancheur ou la fraîcheur en bouche, de sorte que cela est en général incompatible avec les souhaits des consommateurs. Aussi, l'auteur de la conférence précitée préconise, lorsque la croustillance est insuffisante, de retenir un polyol plus pur plutôt que de substituer un polyol par un autre.

Pour ce qui concerne l'ajustement des caractéristiques du noyau à dragéifier, les possibilités d'amélioration existent mais sont généralement très limitées.

Enfin, abaisser la teneur en eau résiduelle des couches dragéifiées pour augmenter la croustillance est en général toujours possible mais s'accompagne immanquablement d'une augmentation des temps de fabrication et des dépenses énergétiques, ce qui est particulièrement gênant.

D'autres solutions semblent avoir été proposées également pour améliorer notamment la croustillance de couches dragéifiées dures sans sucre à base de polyols.

Il a été très souvent conseillé d'incorporer aux sirops de dragéification des substances autres que des polyols. C'est le cas par exemple dans le brevet EP 229.594 de la société WARNER-LAMBERT, il est préconisé d'associer au polyol retenu de la polyvinylpyrrolidone.

D'autres auteurs ont proposé d'utiliser, en dehors de la gélatine et de la gomme arabique dont l'emploi en dragéification est très ancien, des liants tels que des celluloses modifiées, des sirops de glucose, du pullulan ou diverses gommes, à des taux relativement bas, généralement inférieurs à 5 % en sec. Il a été constaté que ces substances améliorent l'adhérence de la couche dragéifiée au noyau ainsi que la cohésion de la couche dragéifiée. Elles agissent aussi dans une certaine mesure sur la croustillance. Toutefois, il apparaît que l'ajoût de telles substances visqueuses perturbe d'une manière significative la cristallisation du polyol utilisé de sorte que la couche dragéifiée présente une cristallinité moindre. Cela expliquerait qu'elle ait alors tendance à devenir collante. De plus, ces substances ne permettent pas, bien au contraire, de réduire les temps de dragéification.

La demanderesse a constaté de façon surprenante et inattendue que l'ajoût de mannitol dans les sirops ou suspensions de dragéification à base de xylitol, de maltitol ou de lactitol, à raison de 20 à 50 % en sec par rapport aux polyols secs présents, permet à la fois de réduire les temps de dragéification et d'augmenter la croustillance des revêtements ainsi obtenus. Contre toute attente, la demanderesse s'est rendue compte que le mannitol, en tant qu'impureté volontairement introduite, loin de retarder la cristallisation du xylitol, du maltitol ou du lactitol, a au contraire un effet pro-cristallisant à certaines concentrations bien précises, c'est à dire qu'il accélère la cristallisation de ces polyols à partir de milieux aqueux saturés ou sursaturés tels que des sirops de dragéification dure. De plus, lorsqu'il est incorporé à un taux suffisant, c'est à dire à plus de 20 %, un effet très notable est constaté au niveau de la croustillance et du croquant de la couche dragéifiée. Par contre, au delà de 50 %, elle a constaté que le mannitol perd son rôle bénéfique sur la croustillance et que de plus, les temps nécessaires pour dragéifier tendent à augmenter à nouveau.

Poursuivant ses recherches, la demanderesse a établi que les rôles de pro-cristallisant et d'agent améliorateur de la croustillance découverts pour le mannitol, pouvaient être également joués par le glucose 1-6 mannitol. Dans ce cas, il faut retenir un taux d'addition, en sec par rapport à la matière sèche constituée des polyols présents dans le sirop de dragéification, de 5 à 50 %.

Elle a également établi qu'il est possible d'utiliser un mélange de polyols contenant du mannitol et/ou du glucose 1-6 mannitol, à condition d'ajuster les taux d'emploi, ce qui ne pose pas de problème particulier.

C'est ainsi qu'en définitive, le postulat couramment répandu selon lequel des couches dragéifiées d'excellente croustillance ne peuvent s'obtenir rapidement qu'en utilisant un polyol de très grande pureté, tout en restant globalement valable n'est pas vérifié lorsqu'on apporte en tant qu'impureté du mannitol ou du glucose 1-6 mannitol, cela en une quantité bien spécifique.

L'invention vise donc, en premier lieu, un nouveau revêtement cristallin dur contenant au moins 90 % d'un mélange de polyols constitué, en sec, d'environ 20 à 50 % de mannitol ou d'environ 5 à 50 % de glucose 1-6 mannitol, le complément à 100 % de la matière sèche du mélange étant constitué essentiellement d'un polyol choisi parmi le xylitol, le maltitol ou le lactitol.

Le revêtement cristallin selon l'invention peut contenir des cristaux purs de mannitol ou de glucose 1-6 mannitol mélangés intimement à des cristaux purs de xylitol, de maltitol ou de lactitol. Un tel revêtement peut être obtenu par exemple en faisant cristalliser à la surface d'un noyau, un sirop contenant à l'état dissous du xylitol, du maltitol ou du lactitol et à l'état cristallisé du mannitol, du glucose 1-6 mannitol ou toute substance contenant l'un ou l'autre de ces deux polyols.

Le revêtement cristallin selon l'invention peut également être constitué de co-cristaux composés d'une part de mannitol ou de glucose 1-6 mannitol et d'autre part de xylitol, de maltitol ou de lactitol. Par co-cristaux, on entend des cristaux obtenus en faisant cristalliser conjointement, à partir d'une solution sursaturée, d'une part le maltitol, le xylitol ou le lactitol et d'autre part le mannitol ou le glucose 1-6 mannitol.

De façon avantageuse, le mélange de polyols constitue plus de 95 % du revêtement conforme à l'invention et mieux encore, plus de 98 % de celui-ci. Ce dernier peut par conséquent aussi comprendre d'autres substances. On peut citer, sans que la liste soit exhaustive, des substances telles que des arômes, des édulcorants intenses, des colorants, des agents de blanchiment comme le talc ou le dioxyde de titane, des agents de charge minérale, des liants comme par exemple la gélatine et la gomme arabique, des matières grasses, des cires ou des laques mais aussi de l'eau. Généralement, la teneur en eau est inférieure à 1,5 %, de préférence inférieure à 1,0 % et mieux encore inférieure à 0,5 %.

Ce revêtement peut être réalisé en utilisant en tant que noyau à dragéifier des produits très divers. Il peut s'agir de produits alimentaires comme par exemple des confiseries telles que des chewing-gums, des comprimés, des lozenges, des gelées, des oeufs liqueur, des pâtes à mâcher, des bonbons durs, des produits chocolatés mais aussi des produits pharmaceutiques ou vétérinaires comme les pilules, des comprimés, des produits pour animaux, des produits diététiques, des granulés de plantes, d'autres produits comme des semences, des fruits secs, des graines, des poudres d'engrais agglomérées ou encore des additifs à base d'enzymes ou de microorganismes destinés en particulier à la fabrication de denrées alimentaires comme le pain ou de produits industriels comme les lessives ou autres poudres détergentes ou lavantes, des additifs pulvérulents composés de vitamines, d'arômes, de parfums, d'acides, d'édulcorants ou de principes actifs divers.

Selon un premier mode de réalisation, le revêtement cristallin selon l'invention comprend du mannitol et un autre polyol choisi parmi le xylitol, le maltitol et le lactitol. De préférence, selon ce mode, seul un de ces trois polyols est associé au mannitol. Avantageusement, ce dernier représente en sec 20 à 40 % de la matière sèche du mélange constitutif du revêtement, et mieux encore 22 à 35 % de celui-ci. Il a été constaté en effet que, les résultats en terme de croustillance et de vitesse de dragéification sont les meilleurs pour ces valeurs. On préfère aussi utiliser du mannitol d'une pureté supérieure à 95 %, et mieux supérieure à 98 %.

Selon un deuxième mode de réalisation, le revêtement cristallin selon l'invention comprend du glucose 1-6 mannitol et un autre polyol choisi parmi le xylitol, le maltitol et le lactitol. De préférence, le glucose 1-6 mannitol est associé à un seul de ces trois polyols. Avantageusement, selon ce mode particulier, le glucose 1-6 mannitol représente en sec 10 à 40 % et mieux 15 à 35 % de la matière sèche du mélange de polyols constitutif du revêtement. Ces valeurs conviennent particulièrement bien lorsque le glucose 1-6 mannitol présente une haute pureté, c'est à dire supérieure à 75 % et de préférence supérieure à 90 %. Lorsque cette pureté diminue et n'atteint plus qu'environ 50 %, comme dans le cas de l'emploi du produit appelé isomalt, les teneurs préférées sont plus basses et se situent entre 5 et 20 % et mieux encore entre 5 et 15 %. Partant de ces considérations, quelques simples essais de routine suffisent à déterminer la teneur en glucose 1-6 mannitol à utiliser en fonction de son degré de pureté, cela pour obtenir les meilleurs résultats en terme de croustillance et de vitesse de dragéification.

Le revêtement cristallin selon l'invention peut, en raison de sa croustillance élevée, constituer un revêtement intérieur, intermédiaire ou extérieur de revêtements complexes tels que ceux préparés par dragéification double ou tels que ceux composés de plusieurs couches dragéifiées de nature ou de texture différente.

L'invention concerne en second lieu un procédé d'obtention par dragéification dure d'un revêtement cristallin dur présentant les caractéristiques définies plus haut.

Le procédé de dragéification dure selon l'invention comprend, dans son mode général, les étapes suivantes :
- mise en mouvement de rotation des noyaux à dragéifier dans une turbine de dragéification ;
- création à la surface des noyaux d'un revêtement semi-cristallin contenant sur sec au moins 90 % d'un mélange de polyols, apporté par applications répétées d'au moins une composition liquide cristallisable ou bien d'au moins une composition liquide cristallisable et d'au moins une composition cristallisée ; le mélange de polyols étant constitué sur sec d'environ 20 à 50 % de mannitol ou d'environ 5 à 50 % de glucose 1-6 de mannitol, le complément à 100 % de la matière sèche étant constitué essentiellement d'un polyol choisi parmi le xylitol, le maltitol ou le lactitol ;
- de préférence séchage du revêtement, dans ou en dehors de la turbine de dragéification, pour permettre la cristallisation plus complète du mannitol ou du glucose 1-6 mannitol et d'au moins l'un des polyols complémentaires.

En ce qui concerne la première étape du procédé, les noyaux à revêtir sont soumis à un turbinage c'est à dire un mouvement de rotation dans une turbine de dragéification. Celle-ci peut avoir une forme ordinaire, c'est à dire une forme en tulipe avec un axe de révolution incliné ou bien une forme cylindrique avec un axe horizontal. Les noyaux, de préférence dépoussiérés antérieurement ou postérieurement à leur introduction dans la turbine, présentent de préférence une forme sphérique, cylindrique ou ovale afin de faciliter l'opération d'enrobage mais peuvent tout aussi bien avoir une forme en coussinet.

La seconde étape consiste à créer à la surface des noyaux un revêtement semi-cristallin composé d'un mélange de polyols particuliers.

Selon un premier mode de réalisation, on applique à la surface des noyaux uniquement des compositions liquides cristallisables. Il peut s'agir en particulier des compositions suivantes :
- une solution contenant à l'état dissous à la fois du mannitol ou du glucose 1-6 mannitol et au moins un autre polyol choisi parmi le xylitol, le maltitol et le lactitol. De préférence, ces solutions ont un niveau de saturation en xylitol, en maltitol ou en lactitol compris entre 0,8 et 1,2, ou,
- une suspension contenant à l'état dissous et à l'état cristallisé à la fois du mannitol et du glucose 1-6 mannitol et au moins un autre polyol choisi parmi le xylitol, le maltitol et le lactitol.

Ces compositions sont nécessairement cristallisables, c'est à dire aptes à générer par évaporation d'eau la cristallisation de mannitol ou de glucose 1-6-mannitol et d'au moins l'un des polyols complémentaires. Selon ce mode de réalisation, on pulvérise à la surface des noyaux une quantité appropriée de composition liquide cristallisable, on laisse répartir cette quantité de façon à obtenir à la surface des noyaux une fine pellicule de composition liquide cristallisable et de préférence, on sèche par soufflage dans la turbine avec un air sec et chaud, de façon à permettre la cristallisation. Ce cycle peut être, comme dans le cas d'une dragéification classique, répété un grand nombre de fois de façon à obtenir le taux de grossissage souhaité.

Selon un second mode de réalisation, on applique à la surface des noyaux au moins l'une des compositions liquides cristallisables définies ci-dessus mais aussi au moins une composition cristallisée.

Par composition cristallisée, on entend toute composition pulvérulente contenant à l'état cristallisé au moins l'un des polyols choisi parmi le mannitol, le glucose 1-6 mannitol, le xylitol, le maltitol et le lactitol.

Selon ce deuxième mode de réalisation, on applique à la surface des noyaux à revêtir d'une part une composition liquide cristallisable et d'autre part, après répartition de celle-ci, une composition cristallisée. Les polyols constituant ces deux types de compositions sont choisis de manière à ce que le revêtement contiennent au moins 90 % d'un mélange de polyols constitué en sec d'environ 20 à 50 % de mannitol ou d'environ 5 à 50 % de glucose 1-6 mannitol, le complément à 100 % de cette matière sèche étant essentiellement un polyol choisi parmi le xylitol, le maltitol et le lactitol.

La dernière étape, facultative mais souhaitable, du procédé conforme à l'invention consiste en un séchage. Il peut être réalisé à l'intérieur de la turbine de dragéification par soufflage d'un air sec et chaud ou en dehors de celle-ci par exemple en plaçant les noyaux revêtus du mélange semi-cristallin dans une chambre d'étuvage. Cette étape vise à permettre la cristallisation plus complète d'une part du mannitol ou du glucose 1-6 mannitol et d'autre part du polyol complémentaire choisi parmi le xylitol, le maltitol et le lactitol. Au lieu de procéder à cette étape, il est également possible de laisser évoluer naturellement le revêtement semi-cristallin vers un état cristallin.

La demanderesse a constaté que la croustillance et le croquant obtenus dépendent à la fois du niveau de cristallinité du revêtement et de sa teneur en eau.

Par des tests organoleptiques, mais aussi par des mesures de dureté et de friabilité à l'aide d'un appareil de marque INSTRON Modèle 4502, la demanderesse a constaté que la croustillance de revêtement contenant des cristaux de mannitol ou de glucose 1-6 mannitol et des cristaux d'au moins un polyol complémentaire choisi parmi le xylitol, le maltitol et le lactitol, est nettement plus élevée que la croustillance de revêtements témoins selon l'art antérieur, constitués uniquement du même polyol complémentaire.

Par des mesures thermodynamiques comparatives entre des revêtements selon l'invention et des revêtements de l'art antérieur, on constate pourtant que, contrairement à ce que tendraient à laisser penser les résultats issus d'études organoleptiques et rhéologiques, les enthalpies de fusion des revêtements selon l'invention sont plus faibles que celles des revêtements témoin de l'art antérieur. En effet, ces valeurs sont d'ordinaire inférieures de 5 à 25 %. A titre d'exemple, toutes choses étant égales par ailleurs, l'enthalpie de fusion d'un revêtement selon l'invention composé de xylitol et de mannitol dans des proportions respectives en sec de 78 % et de 22 % par rapport à l'ensemble des polyols présents n'est que de 170 J/g alors que l'enthalpie d'un revêtement de l'art antérieur uniquement constitué de xylitol est voisine de 215 J/g. Le point de fusion du revêtement est d'ordinaire également abaissé. Dans l'exemple ci-dessus, le point de fusion du revêtement de l'art antérieur est voisin de 93°C alors qu'il n'est que d'environ 87°C pour le revêtement selon l'invention.

Quant à la teneur en eau, on préfère, grâce au séchage final, qu'elle soit abaissée à une valeur inférieure à 1,5 %, de préférence inférieure à 1,0 %, et plus préférentiellement inférieure à 0,5 %.

La société demanderesse a constaté que le procédé conforme à l'invention permet d'obtenir plus rapidement le taux de grossissage souhaité, cela par rapport aux procédés de l'art antérieur du même type utilisant en tant que seul polyol du xylitol, du maltitol ou du lactitol. Elle a constaté également une moindre formation de poussière dans la turbine de dragéification et dans l'atelier de dragéification lorsque sont utilisées uniquement des compositions liquides cristallisables, ce qui est particulièrement avantageux en comparaison à l'art antérieur.

En troisième lieu, l'invention a trait à un procédé améliorant la vitesse de dragéification et la croustillance de revêtements obtenus par dragéification dure à l'aide d'un polyol choisi parmi le xylitol, le maltitol, le lactitol et leurs mélanges consistant à substituer :
- par du mannitol 20 à 50 %, de préférence 20 à 40 %, et plus préférentiellement 22 à 35 % du polyol choisi, ou
- par du glucose 1-6 mannitol 5 à 50 %, de préférence 10 à 40 % et plus préférentiellement 15 à 35 % du polyol choisi.

L'invention vise aussi l'utilisation de mannitol ou de glucose 1-6 mannitol dans ce but et dans les quantités spécifiées ci-dessus. Les gains obtenus en terme de vitesse de dragéification et de croustillance par rapport à l'art antérieur sont d'ordinaire d'au moins 10 %.

Les moyens de mise en oeuvre de ce procédé ainsi que les caractéristiques avantageuses du nouveau revêtement conforme à l'invention pourront être mieux compris à la lumière des exemples qui suivent, lesquels ne sont pas limitatifs.

### EXEMPLE I :

### Essais préliminaires

Ces essais sont reportés pour mettre en évidence les rôles spécifiques du maltitol et du glucose 1-6 mannitol sur la cristallisation du xylitol, du mannitol et du lactitol, en comparaison à d'autres polyols.

On prépare pour cela des solutions à 75 % de matière sèche contenant :
- uniquement du xylitol,
- des mélanges xylitol / autre polyol dans des rapports respectifs (sur sec) de 95 % / 5 %, de 90 % / 10 % et de 78 % /22 %.

En tant qu'autre polyol, on retient les produits de très haute pureté suivants :
- du sorbitol,
- de l'arabitol,
- du mannitol,
- du maltitol,
- du glucose 1-6 mannitol pur obtenu par cristallisation fractionnée d'isomalt.

Les solutions sont préparées selon le mode opératoire standardisé suivant :
- solubilisation à 60°C,
- ajustement de la matière sèche,
- maintien en vase clos au bain-marie à 100°C pendant 1 heure.

On place ensuite l'ensemble des solutions (16 au total) à 20°C pendant 13 jours.

On constate que durant cette période, seulement quatre préparations ont évolué vers une cristallisation de xylitol. Il s'agit des solutions contenant sur sec :
- 90 % de xylitol et 10 % de mannitol,
- 90 % de xylitol et 10 % de glucose 1-6 mannitol,
- 78 % de xylitol et 22 % de mannitol,
- 78 % de xylitol et 22 % de glucose 1-6 mannitol.

Les solutions contenant 22 % de glucose 1-6 mannitol ou 22 % de mannitol ont cristallisé après 2 jours seulement, les deux autres solutions ont évolué de la même manière mais après 5 jours avec le mannitol, et après 7 jours avec le glucose 1-6 mannitol.

L'ensemble des préparations inchangées après 13 jours à 20°C (12 au total) sont soumises à plusieurs cycles thermiques comprenant une phase de 12 heures à 4°C et une phase de 12 heures à 20°C.

On constate que la solution de xylitol pur cristallise après un cycle seulement. Compte tenu de la solubilité dans l'eau du xylitol qui est de 62,7 % à 20°C, on peut noter que la solution initiale est restée sans changement à l'état sursaturé pendant 13 jours et qu'une seule baisse de température à 4°C a suffi pour provoquer la cristallisation du xylitol.

Après 4 cycles de 12 heures à 4°C et de 12 heures à 20°C, on voit apparaître des cristaux de xylitol dans la solution composée en sec de 95 % de xylitol et de 5 % de glucose 1-6 mannitol.

L'ensemble des autres solutions (10 au total) sont restées inchangées par rapport à l'état initial, même après 7 cycles thermiques.

On déduit de ces essais que de façon surprenante le mannitol et le glucose 1-6 mannitol accèlèrent la cristallisation du xylitol à partir d'une solution sursaturée mais à la condition d'être utilisés à une concentration suffisante (supérieure à 10 %). En effet, ces deux mêmes polyols ont un effet inverse à faible concentration. L'effet pro-cristallisant du mannitol et du glucose 1-6 mannitol à certaines concentrations peut être utilisé pour accélérer la vitesse de dragéification dure dans le cas du xylitol.

On remarque que les autres polyols utilisés (sorbitol, maltitol et arabitol) ne font que retarder la cristallisation du xylitol et sont de ce fait de vrais anticristallisants du xylitol.

L'effet pro-cristallisant du mannitol et du glucose 1-6 mannitol à certaines concentrations, existe aussi sur le maltitol et sur le lactitol comme l'a vérifié la demanderesse par d'autres essais du même type.

A titre d'exemple, la demanderesse a observé l'effet pro-cristallisant du mannitol sur le maltitol au niveau d'une préparation à 70 % de matière sèche contenant respectivement 70 % de maltitol et 30 % de mannitol.

### EXEMPLE II

### Préparation de revêtements selon l'invention et selon l'art antérieur.

### 2.1) Préparation :

On dragéifie les noyaux de chewing-gums en forme de coussinet par emploi de compositions de polyols présentant toutes une matière sèche de 75 % et contenant toutes sur sec 98,7% de polyols et 1,3 % de gomme arabique.

Pour cela, on utilise quatre différentes compositions :
- le sirop A : celui-ci ne contient en tant que polyol que du xylitol ; il s'agit d'un sirop selon l'art antérieur,
- le sirop B qui contient en tant que polyol 90 % de xylitol et 10 % de mannitol,
- le sirop I₁ lequel contient en tant que polyol 79 % de xylitol et 21 % de mannitol,
- et le sirop I₂ lequel contient en tant que polyol 75% de xylitol et 25 % de mannitol.

Pour éviter leur éventuelle cristallisation, les quatre sirops sont maintenus à une température de 70°C.

On procède à quatre essais de dragéification dure en utilisant chacun des quatre sirops pendant toute la durée de la dragéification. Pour cela, on place 1 kg de noyaux dans une turbine de dragéification en forme de tulipe.

On pulvérise chacune des compositions à raison de 10 ml sur les noyaux en rotation. Après répartition de cette quantité, on sèche les noyaux par ventilation avec de l'air sec et chaud.

Ce cycle terminé, on le reprend de façon identique mais en augmentant progressivement les quantités appliquées, cela jusqu'à obtenir des taux de grossissage de 20 %. La moitié des produits dragéifiés est alors extraite de la turbine. On continue pour l'autre moitié la dragéification jusqu'à obtenir un taux de grossissage de 30 %.

On constate que pour atteindre le même taux de grossissage, le temps de dragéification est moindre avec les sirops contenant du mannitol et cela d'autant plus que la quantité de mannitol est importante. Une moindre formation de poussière est également constatée avec les sirops I₁ et I₂ qu'avec les sirops A et B.

### 2.2) Qualité organoleptique des revêtements obtenus

On soumet les quatre types de revêtements obtenus à un jury expert pour notation de la croustillance ( 0 : très faible croustillance et 5 : très bonne croustillance).

Les plus hauts scores à même taux de grossissage sont obtenus pour les revêtements durs cristallins préparés par emploi des sirops I₁ et I₂.

### 2.3) Mesures comparatives de dureté et de friabilité de revêtements selon l'invention et selon l'art antérieur.

On étudie à l'aide d'un matériel de type INSTRON Modèle 4502, la dureté et la friabilité d'un revêtement selon l'invention (sirop I₁) et d'un revêtement selon l'art antérieur (sirop A) tels qu'obtenus ci-dessus avec un taux de grossissage de 20 % et de 30 %. Ces revêtements contiennent 0,7 % d'eau.

La dureté ainsi mesurée correspond à la force nécessaire pour obtenir la première cassure du revêtement, rapportée à la distance de pénétration du poinçon utilisé. La friabilité correspond, quant à elle, au nombre obtenu de cassures du revêtement pour une pénétration imposée du poinçon utilisé.

Ces deux valeurs permettent de calculer une valeur de croustillance INSTRON directement corrélable aux résultats de croustillance obtenus grâce à un jury expert.

| | Taux de grossissage | | | |
|---|---|---|---|---|
| | 20 % | | 30 % | |
| | Sirop I₁ | Sirop A | Sirop I₁ | Sirop A |
| Dureté (N/mm) | 56 | 65 | 72 | 86 |
| Friabilité | 8 | 5 | 11 | 8 |
| Croustillance INSTRON | 2,5 | 2,1 | 3,4 | 3,1 |

On constate que les revêtements selon l'invention, bien que significativement moins durs, sont très nettement plus friables et plus croustillants.

### 2.4) Etude thermodynamique

Les revêtements selon l'invention obtenus par emploi des sirops I₁ et I₂ présentent des points de fusion compris entre 82 et 89°C alors que le point de fusion de revêtement selon l'art antérieur est d'environ 93°C.

Il faut constater que l'on ne décèle qu'un seul pic de fusion pour les revêtements conformes à l'invention tels qu'obtenus ci-dessus, bien qu'ils contiennent à la fois du xylitol et du mannitol.

L'enthalpie mesurée pour les revêtements selon l'invention est compris entre 160 et 180 J/g alors qu'elle est de 215 J/g environ pour le revêtement selon l'art antérieur.

### 2.5) Observations au microscope électronique

On constate qu'au moins certaines zones des revêtements selon l'invention contiennent deux populations de cristaux. Certains d'entre eux peu nombreux de forme allongée et parallélipipédique ressemblent aux cristaux ordinaires de mannitol ; les autres de forme plus compacte et moins allongée s'apparentent à des cristaux ordinaires de xylitol.

### EXEMPLE III

### Préparation de revêtements selon l'invention et selon l'art antérieur.

### 3.1) Préparation :

On dragéifie les noyaux de chewing-gums en forme de coussinet par emploi de compositions de polyols présentant toutes une matière sèche de 75 % et contenant toutes sur sec 98,7% de polyols et 1,3 % de gomme arabique.

Pour cela, on utilise deux compositions différentes :
- le sirop A : celui-ci ne contient en tant que polyol que du xylitol ; il s'agit d'un sirop selon l'art antérieur,
- le sirop I₃ lequel contient en tant que polyols 75% de xylitol et 25 % de mannitol.

Pour éviter leur éventuelle cristallisation, les deux sirops sont maintenus à une température de 70°C.

On procède à deux essais de dragéification dure en utilisant chacun des deux sirops pendant toute la durée de la dragéification. Pour cela, on place 3 kg de noyaux dans une turbine de dragéification en forme de tulipe.

On pulvérise chacune des compositions à raison de 30 ml sur les noyaux en rotation. Après répartition de cette quantité, on sèche les noyaux par ventilation avec de l'air sec et chaud.

Ce cycle terminé, on le reprend de façon identique mais en augmentant progressivement les quantités appliquées, cela jusqu'à obtenir des taux de grossissage de 20 %.

### 3.2) Qualité des chewing-gums obtenus et avantages du procédé :

Le temps nécessaire pour dragéifier les noyaux de chewing-gums est plus court lorsque le sirop I₃ selon l'invention est utilisé, comparativement au sirop A selon l'art antérieur.

Les chewing-gums obtenus selon l'invention ont obtenu une excellente note de croustillance lors de la dégustation par le jury d'experts.

Par ailleurs, l'analyse thermodynamique de ce revêtement cristallin selon l'invention a montré que celui-ci avait un point de fusion de 84,5°C et une enthalpie de fusion de 146 J/g.

### EXEMPLE IV

### Préparation de revêtements selon l'invention et selon l'art antérieur.

### 4.1) Préparation :

On dragéifie les noyaux de chewing-gums en forme de coussinet par emploi de compositions de polyols présentant toutes une matière sèche de 75 % et contenant toutes sur sec 98,7% de polyols et 1,3 % de gomme arabique.

Pour cela, on utilise deux compositions différentes :
- le sirop A : celui-ci ne contient en tant que polyol que du xylitol ; il s'agit d'un sirop selon l'art antérieur,
- le sirop I₄ lequel contient en tant que polyols 78% de xylitol et 22 % de glucose 1-6 mannitol.

Pour éviter leur éventuelle cristallisation, le sirop selon l'art antérieur est maintenu à une température de 70°C, tandis que le sirop I₄ selon l'invention n'est maintenu qu'à une température de 50°C.

On procède à deux essais de dragéification dure en utilisant chacun des deux sirops pendant toute la durée de la dragéification. Pour cela, on place 3 kg de noyaux dans une turbine de dragéification en forme de tulipe.

On pulvérise chacune des compositions à raison de 30 ml sur les noyaux en rotation. Après répartition de cette quantité, on sèche les noyaux par ventilation avec de l'air sec et chaud.

Ce cycle terminé, on le reprend de façon identique mais en augmentant progressivement les quantités appliquées, cela jusqu'à obtenir des taux de grossissage de 20 %.

### 4.2) Qualité des chewing-gums obtenus et avantages du procédé :

Le temps nécessaire pour dragéifier les noyaux de chewing-gums est plus court lorsque le sirop I₄ selon l'invention est utilisé, comparativement au sirop A selon l'art antérieur.

Par ailleurs, le maintien du sirop I₄ selon l'invention à la température de 50°C était suffisant pour empêcher sa cristallisation. Ceci constitue un avantage économique non négligeable, que l'homme du métier saura apprécier.

Les chewing-gums obtenus selon l'invention ont obtenu une excellente note de croustillance lors de la dégustation par le jury d'experts.

Par ailleurs, l'analyse thermodynamique de ce revêtement cristallin selon l'invention a montré que celui-ci avait une enthalpie de fusion de 170 J/g.

### EXEMPLE V

### Préparation de revêtements selon l'invention et selon l'art antérieur.

### 5.1) Préparation :

On dragéifie les noyaux de chewing-gums en forme de coussinet par emploi de compositions de polyols présentant toutes une matière sèche de 75 % et contenant toutes sur sec 98,7% de polyols et 1,3 % de gomme arabique.

Pour cela, on utilise deux compositions différentes :
- le sirop A : celui-ci ne contient en tant que polyol que du maltitol ; il s'agit d'un sirop selon l'art antérieur,
- le sirop I₅ lequel contient en tant que polyols 50% de maltitol et 50 % de glucose 1-6 mannitol.

Pour éviter leur éventuelle cristallisation, le sirop selon l'art antérieur est maintenu à une température de 70°C, tandis que le sirop I₅ selon l'invention n'est maintenu qu'à une température de 50°C.

On procède à deux essais de dragéification dure en utilisant chacun des deux sirops pendant toute la durée de la dragéification. Pour cela, on place 3 kg de noyaux dans une turbine de dragéification en forme de tulipe.

On pulvérise chacune des compositions à raison de 30 ml sur les noyaux en rotation. Après répartition de cette quantité, on sèche les noyaux par ventilation avec de l'air sec et chaud.

Ce cycle terminé, on le reprend de façon identique mais en augmentant progressivement les quantités appliquées, cela jusqu'à obtenir des taux de grossissage de 20 %.

### 5.2) Qualité des chewing-gums obtenus et avantages du procédé :

Le temps nécessaire pour dragéifier les noyaux de chewing-gums est plus court lorsque le sirop I₅ selon l'invention est utilisé, comparativement au sirop A selon l'art antérieur.

Par ailleurs, le maintien du sirop I₅ selon l'invention à la température de 50°C était suffisant pour empêcher sa cristallisation. Ceci constitue un avantage économique non négligeable, que l'homme du métier saura apprécier.

Les chewing-gums obtenus selon l'invention ont obtenu une excellente note de croustillance lors de la dégustation par le jury d'experts.

Par ailleurs, l'analyse thermodynamique de ce revêtement cristallin selon l'invention a montré que celui-ci avait un point de fusion de 92°C.

## Revendications

1. Revêtement cristallin dur contenant au moins 90% d'un mélange de polyols constitué en sec d'environ 20 à 50% de mannitol ou d'environ 5 à 50% de glucose 1-6 mannitol, le complément à 100% de la matière sèche du mélange étant constitué essentiellement d'un polyol choisi parmi le xylitol, le maltitol et le lactitol.

2. Revêtement cristallin dur selon la revendication 1, **caractérisé en ce que** ledit mélange de polyols représente plus de 95%, de préférence plus de 98%, dudit revêtement.

3. Revêtement cristallin dur selon l'une ou l'autre des revendications 1 et 2, **caractérisé en ce que** le mannitol représente en sec 20 à 40%, de préférence 22 à 35%, de la matière sèche dudit mélange de polyols.

4. Revêtement cristallin dur selon l'une ou l'autre des revendications 1 et 2, **caractérisé en ce que** le glucose 1-6 mannitol représente en sec 10 à 40%, de préférence 15 à 35%, de la matière sèche dudit mélange de polyols.

5. Revêtement cristallin dur selon l'une ou l'autre des revendications 1 et 2, **caractérisé en ce qu'**il comprend des cristaux purs de mannitol ou de glucose 1-6 mannitol mélangés intimement à des cristaux purs de xylitol, de maltitol ou de lactitol.

6. Revêtement cristallin dur selon l'une ou l'autre des revendications 1 et 2, **caractérisé en ce qu'**il comprend des co-cristaux composés, d'une part, de mannitol ou de glucose 1-6 mannitol et, d'autre part, de xylitol, de maltitol ou de lactitol.

7. Revêtement cristallin dur selon l'une quelconque des revendications 1 à 3, 5 et 6, contenant au moins 90% d'un mélange de polyols constitué en sec d'environ 20 à 50% de mannitol, le complément à 100% de la matière sèche du mélange étant constitué essentiellement de xylitol, ledit revêtement présentant un point de fusion compris entre 75 et 89°C, de préférence compris entre 82 et 89°C.

8. Revêtement cristallin dur selon l'une quelconque des revendications 1, 2, 4 à 6, contenant au moins 90% d'un mélange de polyols constitué en sec d'environ 5 à 50% de glucose 1-6 mannitol, le complément à 100% de la matière sèche du mélange étant constitué essentiellement de xylitol, ledit revêtement présentant un point de fusion compris entre 60 et 80°C, de préférence compris entre 62 et 78°C.

9. Revêtement cristallin dur selon l'une quelconque des revendications 1 à 8, le complément à 100% de la matière sèche du mélange étant constitué essentiellement de xylitol, ledit revêtement présentant une enthalpie de fusion comprise entre 130 et 180 J/g, de préférence comprise entre 140 et 175 J/g.

10. Procédé d'obtention par dragéification dure d'un revêtement cristallin dur selon l'une quelconque des revendications 1 à 9, **caractérisé en ce qu'**il comprend les étapes suivantes :
- mise en mouvement de rotation des noyaux à dragéifier dans une turbine de dragéification,
- création à la surface desdits noyaux d'un revêtement semi-cristallin contenant sur sec au moins 90% d'un mélange de polyols constitué sur sec d'environ 20 à 50% de mannitol ou d'environ 5 à 50% de glucose 1-6 mannitol, le complément à 100% de la matière sèche étant constitué essentiellement d'un polyol choisi parmi le xylitol, le maltitol ou le lactitol, par applications répétées dudit mélange de polyols sous forme d'au moins une composition liquide cristallisable ou sous forme d'au moins une composition liquide cristallisable et d'au moins une composition cristallisée,
- de préférence séchage dudit revêtement, dans ou en dehors de la turbine de dragéification, de manière à obtenir ledit revêtement cristallin dur.

11. Procédé pour améliorer la vitesse de dragéification et la croustillance de revêtements obtenus par dragéification dure à l'aide d'un polyol choisi parmi le xylitol, le maltitol, le lactitol et leurs mélanges,
**caractérisé en ce qu'**il consiste à substituer :
- 20 à 50%, de préférence 20 à 40%, et plus préférentiellement encore 22 à 35%, dudit polyol choisi par du mannitol, ou
- 5 à 50%, de préférence 10 à 40% et plus préférentiellement encore 15 à 35%, dudit polyol choisi par du glucose 1-6 mannitol.

12. Produit dragéifié, **caractérisé en ce qu'**il comporte un revêtement cristallin dur selon l'une quelconque des revendications 1 à 9, ou obtenu selon la revendication 10.

13. Produit dragéifié selon la revendication 12, **caractérisé en ce qu'**il consiste en un chewing gum.

## Claims

1. Hard crystalline coating contains at least 90% of a polyol mixture consisting, on a dry basis, of about 20 to 50% mannitol or about 5 to 50% glucose 1-6 mannitol, the balance for 100% of the dry matter content of the mixture consisting essentially of a polyol selected from among xylitol, maltitol and lactitol.

2. Hard crystalline coating according to Claim 1, wherein said polyol mixtures represents more than 95%, preferably more than 98%, of said coating.

3. Hard crystalline coating according to either one of Claims 1 and 2, wherein mannitol represents, on a dry basis, 20 to 40%, preferably 22 to 35%, of the dry matter content of said polyol mixture.

4. Hard crystalline coating according to either one of Claims 1 and 2, wherein glucose 1-6 mannitol represents, on a dry basis, 10 to 40%, preferably 15 to 35%, of the dry matter content of said polyol mixture.

5. Hard crystalline coating according to either one of Claims 1 and 2, containing pure mannitol or glucose 1-6 mannitol crystals mixed with pure xylitol, maltitol or lactitol crystals.

6. Hard crystalline coating according to either one of Claims 1 and 2, comprising mannitol or glucose 1-6 mannitol co-crystallized with xylitol, maltitol or lactitol.

7. Hard crystalline coating according to any one of Claims 1 to 3, 5 and 6, containing at least 90% of a polyol mixture consisting, on a dry basis, of about 20 to 50% mannitol, the balance for 100% of the dry matter content of the mixture consisting essentially of xylitol, wherein said coating has a melting point of between 75 and 89°C, preferably between 82 and 89°C.

8. Hard crystalline coating according to any one of claims 1, 2 and 4 to 6, containing at least 90% of a polyol mixture consisting, on a dry basis, of about 5 to 50% glucose 1-6 mannitol, the balance for 100% of the dry matter content of the mixture consisting essentially of xylitol, wherein said coating has a melting point of between 60 and 80°C, preferably between 62 and 78°C.

9. Hard crystalline coating according to any one of Claims 1 to 8, the balance for 100% of the dry matter content of the mixture consisting essentially of xylitol, wherein said coating has an enthalpy of fusion between 130 and 180J/g, preferably between 140 and 175J/g.

10. Process for obtaining a hard crystalline coating according to any one of claims 1 to 9, comprising the following steps :
- rotating the cores or centres to be coated in a coating pan ;
- creating, at the surface of the cores or centres, a semi-crystalline coating containing, on a dry basis, at least 90% of a polyol mixture brought by repeated applications of at least one crystallizable liquid composition or alternatively of a least one crystallizable liquid composition and of at least one crystallized composition ; the polyol mixture consisting, on a dry basis, of about 20 to 50% mannitol or of about 5 to 50% glucose 1-6 mannitol, the balance for 100% of the dry matter content consisting essentially of a polyol chosen from xylitol, maltitol or lactitol ;
preferably, drying the coating in or outside the coating pan in order to allow more complete crystallization of the mannitol or glucose 1-6 mannitol and of at least one of the additional polyols.

11. Process for improving the rate of coating and the crunchiness of coatings obtained by hard coating with the aid of a polyol chosen from xylitol, maltitol, lactitol and mixtures thereof consisting in substituting :
■ by mannitol 20 to 50%, preferably 20 to 40%, and more preferably 22 to 35% of the chosen polyol, or
■ by glucose 1-6 mannitol 50 to 50%, preferably 10 to 40%,and more preferably 15 to 35% of the chosen polyol.

12. Coating product **characterised in that** it comprises a hard crystalline coating according to any one of Claims 1 to 9, or obtained according to Claim 10.

13. Product according to Claim 12 **characterised in that** it consists in a chewing-gum.

## Patentansprüche

1. Harter kristalliner Überzug, der mindestens 90% einer Polyolemischung enthält, die in Trocknen aus etwa 20 bis 50% Mannitol oder etwa 5 bis 50% Glucose-1. 6-mannitol besteht, wobei die Ergänzung der Trockenmasse der Mischung auf 100% im wesentlichen aus einem Polyol besteht, das aus Xylitol, Maltitol und Lactitol ausgewählt ist.

2. Harter kristalliner Überzug nach Anspruch 1, **dadurch gekennzeichnet, dass** die Polyolemischung mehr ais 95%, vorzugsweise mehr ais 98%, des Überzugs darstellt.

3. Harter kristalliner Überzug nach einem der Ansprüche 1 und 2, **dadurch gekennzeichnet, dass** das Mannitol im Trocknen 20 bis 40%, vorzugsweise 22 bis 35%, der Trockenmasse der Polyolemischung darstellt.

4. Harter kristalliner Überzug nach einem der Ansprüche 1 und 2, **dadurch gekennzeichnet, dass** das Glucose-1.6-mannitol im Trocknen 10 bis 40%, vorzugsweise 15 bis 35%, der Trockenmasse der Polyolemischung darstellt.

5. Harter kristalliner Überzug nach einem der Ansprüche 1 und 2, **dadurch gekennzeichnet, dass** er reine Kristalle von Mannitol oder Glucose-1.6-mannitol enthält, die mit reinen Kristallen von Xylitol, Maltitol oder Lactitol innig gemischt sind.

6. Harter kristalliner Überzug nach einem der Ansprüche 1 und 2, **dadurch gekennzeichnet, dass** er Cokristalle enthält, die einerseits aus Mannitol oder Glucose-1.6-mannitol und andererseits aus Xylitol, Maltitol oder Lactitol bestehen.

7. Harter kristalliner Überzug nach einem der Ansprüche 1 bis 3, 5 und 6, der mindestens 90% einer Polyolemischung enthält, die im Trocknen aus etwa 20 bis 50% Mannitol besteht, wobei die Ergänzung der Trockenmasse der Mischung auf 100% in wesentlichen aus Xylitol besteht, wobei diese Mischung einen Schmelzpunkt zwischen 75 und 89°C, vorzugsweise zwischen 82 und 89°C, besitzt.

8. Harter kristalliner Überzug nach einem der Ansprüche 1, 2, 4 bis 6, der mindestens 90% einer Polyolemischung enthält, die in Trocknen aus etwa 5 bis 50% Glucose-1.6-mannitol besteht, wobei die Ergänzung der Trockennasse der Mischung auf 100% in wesentlichen aus Xylitol besteht, wobei dieser Überzug einen Schmelzpunkt zwischen 60 und 80°C, vorzugsweise zwischen 62 und 78°C, besitzt.

9. Harter kristalliner Überzug nach einem der Ansprüche 1 bis 8, bei dem die Ergänzung der Trockenmasse der Mischung auf 100% in wesentlichen aus Xylitol besteht und der eine Schmelzenthalpiezwischen 130 und 180J/g, vorzugsweisezwischen 140 und 175 J/g, besitzt.

10. Verfahren zur Herstellung eines harten kristallinen Überzugs nach einem der Ansprüche 1 bis 9 durch Hartdragierung, **dadurch gekennzeichnet, dass** es die folgenden Schritte umfasst:
- In-Drehung-Versetzen der zu dragierenden Kerne in einer Dragierturbine,
- Erzeugung eines halbkristallinen Überzugs, der im Trocknen mindestens 90% einer Polyolemischung enthält, die im Trocknen aus etwa 20 bis 50% Mannitol oder etwa 5 bis 50% Glucose-1.6-mannitol besteht, wobei die Ergänzung der Trockenmasse auf 100% im wesentlichen aus einem Polyol besteht, das aus Xylitol, Maltitol oder Lactitol ausgewählt ist, auf der Obertfläche der Kerne durch wiederholtes Auftragen dieser Polyolemischung in Formvonmindestens einer kristallisierbaren flüssigen Zusammensetzung oder in Form von mindestens einer kristallisierbaren flüssigen Zusammensetzung und mindestens einer kristallisierten Zusammensetzung,
- vorzugsweise Trocknung des Überzugs in oder außerhalb der Dragierturbine, so dass man den harten kristallinen Überzug erhält.

11. Verfahren zur Verbesserung der Dragiergeschwindigkeit und der Knusprigkeit von Überzügen, die durch Hartdragierung mit Hilfe eines Polyols erhalten werden, das aus Xylitol, Maltitol, Lactitol und ihren Mischungen ausgewählt ist, **dadurch gekennzeichnet, dass** es darin besteht, dass man
- 20 bis 50%, vorzugsweise 20 bis 40% und noch bevorzugter 22 bis 35%, des gewählten Polyols durch Mannitol oder
- 5 bis 50%, vorzugsweise 10 bis 40% und noch bevorzugter 15 bis 35%, des gewählten Polyols durch Glucose-1.6-mannitol ersetzt.

12. Dragiertes Produkt, **dadurch gekennzeichnet, dass** es einen harten kristallinen Überzug nach einem der Ansprüche 1 bis 9 oder einen gemäß Anspruch 10 hergestellten harten kristallinen Überzug aufweist.

13. Dragiertes Produkt nach Anspruch 12, **dadurch gekennzeichnet, dass** es aus einem Kaugummi besteht.
